# EUROPÄISCHE PATENTANMELDUNG

(11) **EP 1 157 728 A1**
(43) Veröffentlichungstag der Anmeldung: **28.11.2001**
(21) Anmeldenummer: 01111757.9
(22) Anmeldetag: 15.05.2001
(51) Int. Cl.: B01D 46/04

(54) **Verfahren zum Entfernen von aussenseitung auf Filterschläuchen haftenden Stäuben und Verkrustungen und Vorrichtung dafür**

(30) Priorität: 23.05.2000 DE 10025163
(71) Anmelder: MGF GUTSCHE & CO. GMBH-BETRIEBS-KG, 36039 Fulda (DE)
(72) Erfinder: Ruoff, Günter, 63263 Neu-Isenburg (DE); Schmitt, Robert, 36100 Petersberg (DE)
(74) Vertreter: Schlagwein, Udo, Dipl.-Ing.

(57) **Zusammenfassung**

Zum Entfernen von außenseitig auf Filterschläuchen haftenden Stäuben und Verkrustungen wird eine als Hohlkörper ausgebildete Saugplatte (1) benutzt, welche einen zum Umgreifen des jeweiligen Filterschlauches bemessenen Durchlass (2) hat, dessen Innenumfangsflache als Ansaugspalt (3) ausgebildet ist. Der Filterschlauch wird zum Reinigen in der Reingaskammer des Schlauchfilters aus der Kopfplatte heraus durch den Durchlass (2) der Saugplatte (1) gezogen, wobei außenseitig am Filterschlauch anhaftende Stäube und Verkrustungen abgesaugt werden.

## Beschreibung

Die Erfindung betrifft ein Verfahren zum Entfernen von außenseitig auf den Filterschläuchen haftenden Stäuben und Verkrustungen mittels eines von innen nach außen durch den jeweiligen Filterschlauch geführten Luftstromes. Weiterhin betrifft die Erfindung eine Vorrichtung zum Entfernen von außenseitig auf Filterschläuchen haftenden Stäuben und Verkrustungen mittels eines von innen nach außen durch den jeweiligen Filterschlauch geführten Luftstromes.

Ein Verfahren und eine Vorrichtung der eingangs genannten Art ist beispielsweise in der DE 195 05 146 A1 beschrieben. In Schlauchfiltern strömt das Rohgas üblicherweise von außen in die Filterschläuche hinein, so dass sich auf der Außenseite der Filterschläuche der Staub sammelt. Die genannte Schrift geht davon aus, dass in Schlauchfiltern Abreinigungsvorrichtungen installiert sind, die mit Druckluft arbeiten. Da dennoch von Zeit zu Zeit eine gründlichere Reinigung der Filterschläuche erforderlich wird, setzt man hierzu das Schlauchfilter still und reinigt dann die einzelnen Filterschläuche mittels einer Druckluftlanze, die von der Reingasseite her individuell in die einzelnen Filterschläuche eingeführt wird und mit der man im Bereich einer Auslassöffnung der Druckluftlanze einen pulsierenden Druckluftstrom erzeugt, der das Filtermedium durchdringt und dadurch außenseitig anhaftenden Staub löst. Diese Reinigung erfolgt dadurch, dass entweder das gesamte Schlauchfilter stillgesetzt wird oder dass einzelne Filterbereiche vom Rohgas abgetrennt werden.

Es hat sich in der Praxis gezeigt, dass auch eine Reinigung von Filterschläuchen mittels pulsierender Druckluft nicht dazu führt, dass der ursprüngliche Luftdurchlässigkeitswert der Filterschläuche wieder erreicht wird. Das gilt insbesondere, wenn es durch Prozessstörungen, beispielsweise Taupunktunterschreitungen, zu fest haftenden Verkrustungen auf der Außenseite der Filterschläuche kommt.

Um diesen Missstand zu beheben, entnimmt man von Zeit zu Zeit die Filterschläuche dem Schlauchfilter und reinigt sie außerhalb der Anlage mittels einer Wäsche. Das ist jedoch mit einem sehr großen Aufwand verbunden und führt zu einer hohen Beanspruchung des Filtermediums durch die beim Waschen auftretende Walkarbeit.

Der Erfindung liegt das Problem zugrunde, ein Verfahren der eingangs genannten Art zum Entfernen von außenseitig auf Filterschläuchen haftenden Stäuben und Verkrustungen zu entwickeln, welches möglichst kostengünstig und ohne Gefahr einer Beschädigung des Filtermediums durchführbar ist und durch das sich möglichst weitgehend alle Verunreinigungen des Filterschlauches entfernen lassen. Weiterhin soll eine Vorrichtung zur Durchführung dieses Verfahrens geschaffen werden.

Das erstgenannte Problem wird erfindungsgemäß dadurch gelöst, dass mittels einer als Hohlkörper ausgebildeten Saugplatte, welche einen zum Umgreifen des jeweiligen Filterschlauches bemessenen Durchlass hat, dessen Innenumfangsfläche als Ansaugspalt ausgebildet ist, der Filterschlauch von außen über seine Länge abgesaugt wird.

Überraschenderweise zeigte sich, dass durch dieses erfindungsgemäße Absaugen der Verunreinigungen an der Außenseite der Filterschläuche sich diese im Gegensatz zu einem Durchdrücken von Luft von innen nach außen vollständig oder nahezu vollständig von Verunreinigungen befreien lassen. Da das Absaugen mittels einer Saugplatte erfolgt, wird jeweils nur in einem sehr eng begrenzten Bereich abgesaugt. Dadurch lässt sich sicherstellen, dass die Saugwirkung tatsächlich in dem gesamten Bereich vorhanden ist. Hierzu im Gegensatz besteht bei einer Druckluftbeaufschlagung des Inneren eines Filterschlauches immer die Gefahr, dass infolge unterschiedlicher Strömungswiderstände, insbesondere nach Abfall einer Staubkruste in einem bestimmten Bereich, die Druckluft nur noch durch diesen Bereich strömt, so dass es in den übrigen Bereichen zu keiner Abreinigung kommt.

Besonders wirtschaftlich ist das Verfahren durchführbar, wenn gemäß einer Weiterbildung der Erfindung die Reinigung innerhalb einer Reingaskammer eines Schlauchfilters erfolgt, indem die Saugplatte jeweils auf ein Loch einer Kopfplatte des Schlauchfilters gesetzt und dann der Filterschlauch durch die Saugplatte hindurch nach oben in die Reingaskammer gezogen wird. Üblicherweise reicht in Schlauchfiltern der Freiraum oberhalb der Kopfplatte für diese Verfahrensweise aus. Weiterhin sind in Schlauchfiltern meist ohnehin Hubzüge vorhanden, mit denen die Filterschläuche zur Durchführung des Verfahrens durch die Saugplatte gezogen werden können.

Der Filterschlauch muss zu beiden Seiten des Absaugbereiches dicht gegen die Innenmantelfläche des Durchlasses der Absaugplatte anliegen, weil anderenfalls die Luft statt aus dem Inneren des Filterschlauches von oben oder unten unmittelbar angesaugt würde. Eine solche Dichtheit geht verloren, wenn der Filterschlauch innerhalb des Durchlasses Eindrückungen oder Falten hat. Das lässt sich mit geringem Aufwand gemäß einer Weiterbildung des erfindungsgemäßen Verfahrens dadurch vermeiden, dass der Filterschlauch zusammen mit einem in ihm angeordneten Stützkorb durch die Saugplatte gezogen wird.

Statt die Filterschläuche durch die Saugplatte zu ziehen, ist es alternativ auch möglich, dass zum Reinigen des Filterschlauches die Saugplatte relativ zu dem Filterschlauch über die Länge des Filterschlauches bewegt wird.

Da ein Betreten des Rohgasraumes von Schlauchfiltern oftmals nicht oder nur mit Schutzaufwand möglich ist, kann man bei nicht ausreichendem Platz im Reingasraum gemäß einer anderen Weiterbildung des Verfahrens vorsehen, dass die Abreinigung des Filterschlauches außerhalb des Schlauchfilters erfolgt, indem der Filterschlauch mit dem eingebauten Stützkorb horizontal ausgerichtet auf Abstützungen aufgelegt wird. Auch eine solche Verfahrensweise ist noch wesentlich kostengünstiger, als das aufwendige Waschen und Trocknen von Filterschläuchen in einer externen Wäscherei.

Das zweitgenannte Problem, nämlich die Schaffung einer Vorrichtung zum Entfernen von außenseitig auf Filterschläuchen haftenden Stäuben und Verkrustungen mittels eines von innen nach außen durch den jeweiligen Filterschlauch geführten Luftstromes, wird erfindungsgemäß dadurch gelöst, dass zur Erzeugung des Luftstromes eine als Hohlkörper ausgebildete Saugplatte vorgesehen ist, welche einen zum Umgreifen des jeweiligen Filterschlauches bemessenen Durchlass hat, dessen Innenumfangsfläche als Ansaugspalt ausgebildet ist.

Mit einer solchen Vorrichtung lassen sich überraschenderweise Filterschläuche vergleichbar gründlich reinigen wie durch Waschen, ohne dass es dabei jedoch zu einer das Filtermedium oftmals übermäßig stark beanspruchenden Walkarbeit kommt. Weiterhin ist die Vorrichtung in einem Schlauchfilter oder in unmittelbarer Nähe zum Schlauchfilter einsetzbar, so dass der aufwendige Transport von Filterschläuchen zur Wäscherei vermieden werden kann.

Die Vorrichtung ist besonders wirtschaftlich einsetzbar, wenn die Saugplatte zum Aufsetzen über jeweils ein einen Filterschlauch aufnehmendes Loch einer Kopfplatte eines Schlauchfilters ausgebildet ist.

Der beim Einziehen in die Saugplatte von der Außenseite des Filterschlauches abfallende Staub kann sich auf der Kopfplatte sammeln, wenn die Saugplatte an ihrer Unterseite beim Aufsetzen auf die Kopfplatte einen Spalt zwischen ihr und der Kopfplatte freilassende Füße hat. Solche Füße ermöglichen weiterhin eine radiale Luftströmung unterhalb der Saugplatte durch den Filterschlauch in das Innere das Filterschlauches.

Filterschläuche weisen am oberen Ende üblicherweise eine Doppelwulst auf, durch die sie im jeweiligen Loch der Kopfplatte gehalten werden. Sie sind deshalb am oberen Ende im Durchmesser größer als im übrigen Bereich. Im Filterschlauch ist üblicherweise ein Stützkorb eingesetzt, der ein Kollabieren des Filterschlauches verhindert. Man könnte den Filterschlauch dadurch in den Durchlass einsetzen, dass man zunächst den Stützkorb entfernt, dann den Filterschlauch mit seiner Doppelwulst durch den Durchlass zieht und anschließend den Stützkorb wieder einsetzt. Ein vorübergehendes Entfernen des Stützkorbes wird unnötig, wenn gemäß einer vorteilhaften Weiterbildung der Erfindung die Saugplatte zum Aufsetzen auf einen Filterschlauch ein Basisteil und ein um ein Gelenk wegschwenkbares, im weggeschwenkten Zustand den Durchlass maulartig freigebendes Schwenkteil hat. Durch diese Gestaltung wird es möglich, die Saugplatte im geöffneten Zustand von der Seite her auf einen Filterschlauch unterhalb der Doppelwulst zu schieben und dann die Saugplatte zu schließen.

Ein Teil der außenseitig am Filterschlauch haftenden Stäube und Verunreinigungen wird von ihm entfernt, bevor der jeweilige Bereich in die Saugplatte eintritt, so dass nur ein Teil der Stäube und Verunreinigungen abgesaugt werden muss, wenn der Durchlass der Saugplatte an seiner Unterseite durch eine gegen den Filterschlauch anliegende Abschabkante begrenzt ist. Eine solche Abschabkante führt zu einer Entlastung der Absaugung und verbessert dadurch die Reinigungswirkung der Absaugung.

Eine ausreichend gleichmäßige Absaugung über den gesamten Umfangsbereich des Durchlasses der Saugplatte lässt sich ohne Beeinträchtigung einer einfachen Handhabung der Vorrichtung erreichen, wenn das Basisteil zwei jeweils mit einem Leitungsteil eines Hosenstückes verbundene Luftauslässe hat.

Die Erfindung lässt verschiedene Ausführungsformen zu. Zur weiteren Verdeutlichung ihres Grundprinzips ist eine davon schematisch in der Zeichnung dargestellt und wird nachfolgend beschrieben. Die Zeichnung zeigt in
- Fig.1: eine perspektivische Darstellung einer Saugplatte nach der Erfindung,
- Fig.2: eine Schnittdarstellung der Saugplatte.

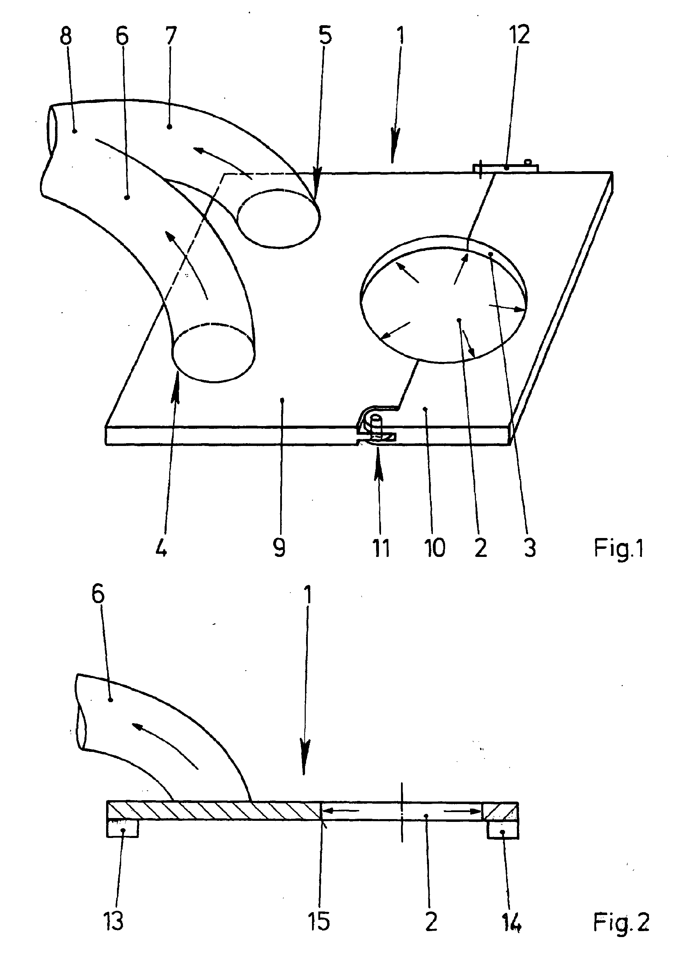

Die Figur 1 zeigt eine als Hohlkörper ausgebildete Saugplatte 1, welche einen zylindrischen Durchlass 2 hat, dessen Innenmantelfläche einen Ansaugspalt 3 bildet. Die Saugplatte 1 hat auf ihrer Oberseite zwei Luftauslässe 4, 5, an welchen jeweils ein Leitungsteil 6, 7 eines Hosenstückes 8 angeschlossen ist. Dieses Hosenstück 8 wird bei Benutzung der Vorrichtung mit einem Schlauch verbunden, der beispielsweise zu einer fest installierten Absaugung oder zu einem separaten Sauggerät führt.

Die Saugplatte 1 besteht aus einem Basisteil 9, an welchem die Leitungsteile 6, 7 angeschlossen sind, und einem Schwenkteil 10, welches durch ein Gelenk 11 mit dem Basisteil 9 verbunden ist. Hierdurch wird es möglich, das Schwenkteil 10 im Uhrzeigersinn um das Gelenk 11 zu verschwenken, so dass der Durchlass 2 maulartig geöffnet wird. Das ermöglicht es, die Saugplatte 1 von der Seite her auf einen Filterschlauch aufzuschieben und anschließend das Schwenkteil 10 wieder zu verschließen. Ein Riegel 12 dient dazu, die geschlossene Stellung zu sichern.

Die Figur 2 zeigt, dass die Saugplatte 1 an ihrer Unterseite Füße 13, 14 hat, mit denen sie bei Gebrauch auf einer Kopfplatte innerhalb eines Schlauchfilters aufzustehen vermag. Die untere, umlaufende Kante des Durchlasses 2 der Saugplatte 1 ist als Abschabkante 15 ausgebildet. Der Durchmesser des Durchlasses 2 ist so bemessen, dass er dem Außendurchmesser des zu reinigenden Filterschlauches entspricht. Zieht man einen solchen Filterschlauch von unten nach oben durch die Saugplatte 1, dann wird durch die Abschabkante 15 ein Teil des außenseitig an ihm haftenden Staubes und Schmutzes abgeschabt. Der in den Durchlass 2 gelangende Staub und Schmutz wird dann anschließend durch die Saugwirkung der Saugplatte 1 entfernt, wie das durch Pfeile in den Figuren 1 und 2 verdeutlicht wurde.

### Bezugszeichenliste

- 1: Saugplatte
- 2: Durchlass
- 3: Ansaugspalt
- 4: Luftauslass
- 5: Luftauslass

- 6: Leitungsteil
- 7: Leitungsteil
- 8: Hosenstück
- 9: Basisteil
- 10: Schwenkteil

- 11: Gelenk
- 12: Riegel
- 13: Fuß
- 14: Fuß
- 15: Abschabkante

## Patentansprüche

1. Verfahren zum Entfernen von außenseitig auf Filterschläuchen haftenden Stäuben und Verkrustungen mittels eines von innen nach außen durch den jeweiligen Filterschlauch geführten Luftstromes, **dadurch gekennzeichnet, dass** mittels einer als Hohlkörper ausgebildeten Saugplatte, welche einen zum Umgreifen des jeweiligen Filterschlauches bemessenen Durchlass hat, dessen Innenumfangsfläche als Ansaugspalt ausgebildet ist, der Filterschlauch von außen über seine Länge abgesaugt wird.

2. Verfahren nach Anspruch 1, **dadurch gekennzeichnet, dass** die Reinigung innerhalb einer Reingaskammer eines Schlauchfilters erfolgt, indem die Saugplatte jeweils auf ein Loch einer Kopfplatte des Schlauchfilters gesetzt und dann der Filterschlauch durch die Saugplatte hindurch nach oben in die Reingaskammer gezogen wird.

3. Verfahren nach den Ansprüchen 1 oder 2, **dadurch gekennzeichnet, dass** der Filterschlauch zusammen mit einem in ihm angeordneten Stützkorb durch die Saugplatte gezogen wird.

4. Verfahren nach zumindest einem der vorangehenden Ansprüche, **dadurch gekennzeichnet, dass** zum Reinigen des Filterschlauches die Saugplatte relativ zu dem Filterschlauch über die Länge des Filterschlauches bewegt wird.

5. Verfahren nach Anspruch 4, **dadurch gekennzeichnet, dass** die Abreinigung des Filterschlauches außerhalb des Schlauchfilters erfolgt, indem der Filterschlauch mit dem eingebauten Stützkorb horizontal ausgerichtet auf Abstützungen aufgelegt wird.

6. Verfahren nach zumindest einem der vorangehenden Ansprüche, **dadurch gekennzeichnet, dass** mit der Saugplatte durch eine daran vorgesehene Abschabkante ein Teil des Staubes und der Verkrustungen auf dem Filterschlauch abgeschabt und dadurch von ihm entfernt werden.

7. Vorrichtung zum Entfernen von außenseitig auf Filterschläuchen haftenden Stäuben und Verkrustungen mittels eines von innen nach außen durch den jeweiligen Filterschlauch geführten Luftstromes, **dadurch gekennzeichnet, dass** zur Erzeugung des Luftstromes eine als Hohlkörper ausgebildete Saugplatte (1) vorgesehen ist, welche einen zum Umgreifen des jeweiligen Filterschlauches bemessenen Durchlass (2) hat, dessen Innenumfangsfläche als Ansaugspalt (3) ausgebildet ist.

8. Vorrichtung nach Anspruch 7, **dadurch gekennzeichnet, dass** die Saugplatte (1) zum Aufsetzen über jeweils ein einen Filterschlauch aufnehmendes Loch einer Kopfplatte eines Schlauchfilters ausgebildet ist.

9. Vorrichtung nach zumindest einem der vorangehenden Ansprüche, **dadurch gekennzeichnet, dass** die Saugplatte (1) an ihrer Unterseite beim Aufsetzen auf die Kopfplatte einen Spalt zwischen ihr und der Kopfplatte freilassende Füße hat.

10. Vorrichtung nach zumindest einem der vorangehenden Ansprüche, **dadurch gekennzeichnet, dass** die Saugplatte (1) zum Aufsetzen auf einen Filterschlauch ein Basisteil (9) und ein um ein Gelenk (11) wegschwenkbares, im weggeschwenkten Zustand den Durchlass (2) maulartig freigebendes Schwenkteil (10) hat.

11. Vorrichtung nach zumindest einem der vorangehenden Ansprüche, **dadurch gekennzeichnet, dass** der Durchlass (2) der Saugplatte (1) an seiner Unterseite durch eine gegen den Filterschlauch anliegende Abschabkante (15) begrenzt ist.

12. Vorrichtung nach zumindest einem der vorangehenden Ansprüche, **dadurch gekennzeichnet, dass** das Basisteil (9) zum Verbinden mit einer Absaugung zwei mit einem Leitungsteil (6, 7) eines Hosenstückes (8) verbundene Luftauslässe (4, 5) hat.
